# EUROPEAN PATENT SPECIFICATION

(11) **EP 4 066 443 B1**
(45) Date of publication and mention of the grant of the patent: **30.09.2026**
(21) Application number: 19813485.0
(22) Date of filing: 29.11.2019
(51) Int. Cl.: H04L 41/0853, H04L 41/0668, H04L 43/0811, H04L 43/0817, H04L 43/20

(54) **SERVER MANAGEMENT**
SERVERVERWALTUNG
GESTION DE SERVEUR

(43) Date of publication of application: 05.10.2022
(73) Proprietor: TELEFONAKTIEBOLAGET LM ERICSSON (PUBL), 164 83 Stockholm (SE)
(72) Inventor: NEMETH, Gabor, 1146 Budapest (HU); GÉHBERGER, Dániel, Montreal, QC H3W2H5 (CA); MÁTRAY, Péter, 1024 Budapest (HU); PINCZEL, Balázs, 1222 Budapest (HU)
(74) Representative: Ericsson
(86) International application number: PCT/EP2019/083153
(87) International publication number: WO 2021/104649

(56) References cited:
- US-A1- 2003 037 284
- US-A1- 2018 150 501
- US-B1- 8 473 775
- RUI GARCIA ET AL: "Efficient middleware for byzantine fault tolerant database replication", EUROSYS'11 : PROCEEDINGS OF THE EUROSYS 2011 CONFERENCE ; APRIL 10 - APRIL 13, 2011, SALZBURG, AUSTRIA, ACM, NEW YORK, NY, 10 April 2011 (2011-04-10), pages 107 - 122, XP058000564, ISBN: 978-1-4503-0634-8, DOI: 10.1145/1966445.1966456
- BOGDAN C POPESCU BRUNO CRISPO BPOPESCU@CS VU NL CRISPO@CS VU NL VRIJE UNIVERSITEIT ET AL: "Secure Data Replication over Untrusted Hosts", USENIX, USENIX, THE ADVANCED COMPUTING SYSTEMS ASSOCIATION, 11 September 2003 (2003-09-11), pages 1 - 7, XP061010110
- BURROWS M: "THE CHUBBY LOCK SERVICE FOR LOOSELY-COUPLED DISTRIBUTED SYSTEMS", 7TH SYMPOSIUM ON OPERATING SYSTEMS DESIGN AND IMPLEMENTATION. NOVEMBER 6-8, 2006, SEATTLE, WA, USENIX ASSOCIATION, US, 6 November 2006 (2006-11-06), pages 335 - 350, XP001544713

## Description

### Technical Field

The disclosure relates to methods for managing a set of servers of a network. The disclosure also relates to a client node, a data storage node, and a server configured to operate in accordance with those methods.

### Background

There are many types of data stores for storing data elements (e.g. values). Some existing systems comprise distributed data stores. In general, these systems store data elements on multiple physical or virtual machines in such a way that each data element has one or more copies. These copies are called replicas. Thus, the systems store replicated data elements. The number of copies of a data element is referred to as the replication factor of the data element. The replication factor may or may not be the same for each of data element in the system. Replicas are stored for both reliability and performance reasons. For example, by storing at least one replica, reliability can be provided when a system fails and the number of failing machines is at most one less than the replication factor. Also, performance improvements can be gained where a client accessing a data element attempts to access multiple replicas in parallel and uses the one that it can access first.

One existing type of replication system follows a master-slave approach, where a data element is first updated on a designated replica stored at a master server of the system and then the updated data element (or new content) is carried over to the slave servers of the system. The client either sees the previous data element or the updated data element, never something in between.

An issue with these existing systems, is that they can become degraded for at least a subset of stored data elements when some servers at which replicas of the data elements are stored are temporarily or indefinitely unavailable. Most notably, a server may be unavailable due to partitioning, where connection between some or all of the servers running the distributed system cease (e.g. due to network hardware or configuration failure, a temporary surge in point-to-point latencies, a queue build-up, etc.) or where there is a server outage when a server stops (with or without restarting) due to some internal failure event. In these cases, some clients may not be able to reach some or all servers at which replicas of data elements are stored.

When a distributed system implementing a master-slave replication scheme becomes partitioned, a client that is unable to access a replica of a data element stored at a master server cannot update the data element, even if the client is connected to a majority of replicas of that data element stored at the slave servers. In essence, when partitioning occurs, the system is decomposed into two or more smaller partitions that individually may or may not function orderly. On the one hand, a controlling algorithm in these situations is unable to reliably ascertain how long it will take until all partitions are joined together again, if at all, and thus may attempt to restore data replication factors within the disjointed partitions. It is possible that only a small subset of servers are inaccessible and the system can keep running the larger partition for all data elements. On the other hand, during a partition, clients may try to access data elements in any of the partitions and, for those data elements where the majority of the replicas can be accessed, there is no reason to stop servicing those clients.

Existing data storage solutions can restore groups of data elements, called shards, but not individual data elements. A shard is created by grouping together data elements according to an implementation defined algorithm that is not controlled by the users of the service. The number of shards is typically defined by the implementation. For example, in a storage solution that is referred to as RAMCloud, data elements are segmented across all storage servers for parallel restoration of state on recovery after server failures.

There exist consensus algorithms that are used to elect a new leader (or new master server) if a current leader (or current master server) fails. A prominent example of such a consensus algorithms is referred to as Raft. However, such existing consensus algorithms are compute resource intensive and incur a disproportionately large compute overhead. As a result, these existing consensus algorithms are known to be slow. Furthermore, master-slave data replication systems are more sensitive to server failure than a full cluster of Raft servers. In particular, the loss of a single node storing a master replica in the master-slave data replication systems requires corrective procedures, whereas a cluster of Raft servers can generally tolerate failure of up to one less than half of all servers. As the former event is much more likely, a more lightweight solution is still needed to avoid the issues associated with partitioning.

"Efficient Middleware for Byzantine Fault Tolerant Database Replication", Garcia et al, discloses a byzantine fault tolerance (BFT) database replication middleware that provides snapshot isolation semantics. US 2018/0150501 discloses a database system that includes a client device and server devices including a master server and at least one slave server. US 2003/0037284 discloses a fault-tolerant server group that includes a master server and at least one back-up server.

### Summary

It is an object of the disclosure to obviate or eliminate at least some of the above-described disadvantages associated with existing techniques and provide an improved technique for managing a set of servers of a network. The invention is as defined in and by the appended claims.

Therefore, according to an aspect of the disclosure, there is provided a method according to independent claim 1 performed by a client node of a network for managing a set of servers of the network.

There is thus provided an improved method for managing a set of servers of a network. In particular, the method ensures that it is still possible for the client node to access at least some data element replicas where the master server is unreachable, e.g. due to partitioning. In this way, data service to the client node can be upheld. For example, it is possible for data element updates to proceed even when there is a failure within the system. Also, data elements can be handled individually as they are not restricted by the peculiarities of a sharding mechanism. Thus, if a data service can proceed for at least some (maybe even just one) data element contrary to a partitioned state of a set of servers (or the cluster) as a whole, those data elements can be served. Moreover, the method is more lightweight and has a lower compute load than existing techniques. In this way, the method is faster to execute. In some embodiments, the method may comprise initiating transmission of a request toward the data storage node to lock the data element. In this way, initiation of multiple overlapping (in time) instances of the described method are prevented. This avoids data corruption and/or service error.

According to another aspect of the disclosure, there is provided a client node according to independent claim 4.

According to another aspect of the disclosure, there is provided a method according to independent claim 5. performed by a data storage node of a network for managing a set of servers of the network.

There is thus provided an improved method for managing a set of servers of a network. In particular, the method ensures that it is still possible for the client node to access at least some data element replicas where the master server is unreachable, e.g. due to partitioning. In this way, data service to the client node can be upheld. For example, it is possible for data element updates to proceed even when there is a failure within the system. Also, data elements can be handled individually as they are not restricted by the peculiarities of a sharding mechanism. Thus, if a data service can proceed for at least some (maybe even just one) data element contrary to a partitioned state of a set of servers (or the cluster) as a whole, those data elements can be served. Moreover, the method is more lightweight and has a lower compute load than existing techniques. In this way, the method is faster to execute.

According to another aspect of the disclosure, there is provided a data storage node according to independent claim 7 comprising processing circuitry configured to operate in accordance with the method described earlier in respect of the data storage node. In some embodiments, the data storage node may comprise at least one memory for storing instructions which, when executed by the processing circuitry, cause the data storage node to operate in accordance with the method described earlier in respect of the data storage node. The data storage node thus provides the advantages discussed earlier in respect of the method performed by the data storage node.

According to another aspect of the disclosure, there is provided a method according to independent claim 8 performed by a slave server of a set of servers of a network for managing the set of servers.

There is thus provided an improved method for managing a set of servers of a network. In particular, the method ensures that it is still possible for the client node to access at least some data element replicas where the master server is unreachable, e.g. due to partitioning. In this way, data service to the client node can be upheld. For example, it is possible for data element updates to proceed even when there is a failure within the system. Also, data elements can be handled individually as they are not restricted by the peculiarities of a sharding mechanism. Thus, if a data service can proceed for at least some (maybe even just one) data element contrary to a partitioned state of a set of servers (or the cluster) as a whole, those data elements can be served. Moreover, the method is more lightweight and has a lower compute load than existing techniques. In this way, the method is faster to execute.

According to another aspect of the disclosure, there is provided a slave server comprising processing circuitry configured to operate in accordance with the method described earlier in respect of the slave server. In some embodiments, the slave server comprises at least one memory for storing instructions which, when executed by the processing circuitry, cause the slave server to operate in accordance with the method described earlier in respect of the slave server. The slave server thus provides the advantages discussed earlier in respect of the method performed by the slave server.

According to another aspect of the disclosure, there is provided a network comprising any one or more of a client node as described earlier, a data storage node as described earlier, and a slave server as described earlier. The network thus provides the advantages discussed earlier in respect of the method performed by the client node, the data storage node, and/or the slave server.

According to another aspect of the disclosure, there is provided a computer program comprising instructions which, when executed by processing circuitry, cause the processing circuitry to perform the method described earlier in respect of the client node, the data storage node, and/or the slave server. The computer program thus provides the advantages discussed earlier in respect of the method performed by the client node, the data storage node, and/or the slave server.

Thus, an advantageous technique for managing a set of servers of a network is provided. The present invention is defined in the appended independent claims to which reference should be made. Advantageous features are set out in the appended dependent claims

### Brief description of the drawings

For a better understanding of the technique, and to show how it may be put into effect, reference will now be made, by way of example, to the accompanying drawings, in which:
Figure 1 is a block diagram illustrating a client node according to an embodiment;
Figure 2 is a block diagram illustrating a method performed by a client node according to an embodiment;
Figure 3 is a block diagram illustrating a data storage node according to an embodiment;
Figure 4 is a block diagram illustrating a method performed by a data storage node according to an embodiment;
Figure 5 is a block diagram illustrating a slave server according to an embodiment;
Figure 6 is a block diagram illustrating a method performed by a slave server according to an embodiment;
Figure 7 a block diagram illustrating a network according to an embodiment;
Figure 8(a)- (b) is a signalling diagram illustrating an exchange of signals in a network according to an embodiment;
Figure 9 is a block diagram illustrating a method according to an embodiment;
Figure 10 is a block diagram illustrating a client node according to an embodiment;
Figure 11 is a block diagram illustrating a data storage node according to an embodiment; and
Figure 12 is a block diagram illustrating a slave server according to an embodiment.

### Detailed Description

As mentioned earlier, an advantageous technique for managing a set of servers of the network is described herein. The set of servers described herein can comprise one or more virtual servers and/or one or more hardware servers according to some embodiments. The servers described herein can, for example, be machines (e.g. virtual machines and/or hardware machines).

The technique that is described herein is implemented by a client node of a network, a data storage node of the network, and a slave server of the network. The network referred to herein can, for example, be a communication network, such as an internet protocol (IP) based communication network. Examples of such a network include, but are not limited to, an IP multimedia subsystem (IMS) network, a voice over IP (VoIP) network, a hosted services domain network, or similar.

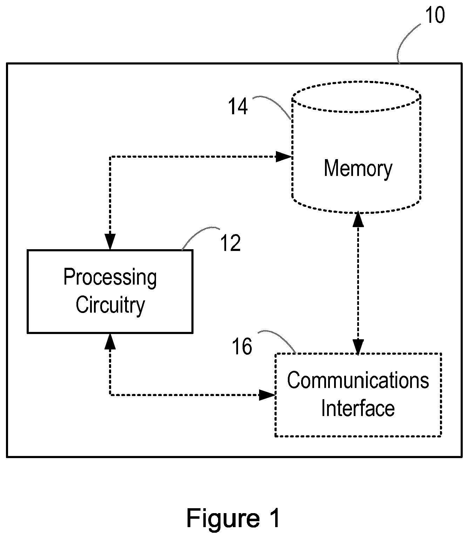

**Figure 1** illustrates a client node 10 of a network in accordance with an embodiment. The client node 10 is for managing a set of servers of the network. In some embodiments, the client node 10 may be a virtual network function (VNF) node, e.g. of a data center. In some of these embodiments, the VNF node may be configured to process telecommunications core functionality on behalf of a telecommunication network subscriber's user equipment (UE). In other embodiments, the client node 10 may itself be a UE, such as a mobile terminal. In some embodiments, the client node 10 can be operated by a user, such as a user of a service of the network.

As illustrated in Figure 1, the client node 10 comprises processing circuitry (or logic) 12. The processing circuitry 12 controls the operation of the client node 10 and can implement the method described herein. The processing circuitry 12 can comprise one or more processors, processing units, multi-core processors or modules that are configured or programmed to control the client node 10 in the manner described herein. In particular implementations, the processing circuitry 12 of the client node 10 can comprise a plurality of software and/or hardware modules that are each configured to perform, or are for performing, individual or multiple steps of the method described herein.

Briefly, the processing circuitry 12 of the client node 10 is configured to, in response to a determination that a first replica of a data element stored at a first (or old) master server of the set of servers is unreachable, select a slave server of the set of servers, at which a second replica of the data element is stored, to become a second (or new) master server of the set of servers. The processing circuitry 12 of the client node 10 is also configured to initiate a procedure to update information stored at a data storage node of the network, that is indicative of which of the set of servers is a master server and which of the set of servers is a slave server, to make the selected slave server the second master server.

Herein, a data element can be any type of data element, such as a value, a key (e.g. a key value), metadata (e.g. value related metadata), and/or any other data element. The procedure to update information stored at the data storage node of the network to make the selected slave server the second master server may also be referred to herein as the "slave elevation procedure".

As illustrated in Figure 1, in some embodiments, the client node 10 may optionally comprise a memory 14. The memory 14 of the client node 10 can comprise a volatile memory or a non-volatile memory. In some embodiments, the memory 14 of the client node 10 may comprise a non-transitory media. Examples of the memory 14 of the client node 10 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 12 of the client node 10 can be connected to the memory 14 of the client node 10. In some embodiments, the memory 14 of the client node 10 may be for storing program code or instructions which, when executed by the processing circuitry 12 of the client node 10, cause the client node 10 to operate in the manner described herein in respect of the client node 10. For example, in some embodiments, the memory 14 of the client node 10 may be configured to store program code or instructions that can be executed by the processing circuitry 12 of the client node 10 to cause the client node 10 to operate in accordance with the method described herein in respect of the client node 10. Alternatively or in addition, the memory 14 of the client node 10 can be configured to store any messages, requests, responses, indications, information, data, notifications, signals, or similar, that are described herein. The processing circuitry 12 of the client node 10 may be configured to control the memory 14 of the client node 10 to store any messages, requests, responses, indications, information, data, notifications, signals, or similar, that are described herein.

In some embodiments, as illustrated in Figure 1, the client node 10 may optionally comprise a communications interface 16. The communications interface 16 of the client node 10 can be connected to the processing circuitry 12 of the client node 10 and/or the memory 14 of client node 10. The communications interface 16 of the client node 10 may be operable to allow the processing circuitry 12 of the client node 10 to communicate with the memory 14 of the client node 10 and/or vice versa. Similarly, the communications interface 16 of the client node 10 may be operable to allow the processing circuitry 12 of the client node 10 to communicate with the data storage node, the slave server, and/or any other node or server of the network. The communications interface 16 of the client node 10 can be configured to transmit and/or receive any messages, requests, responses, indications, information, data, notifications, signals, or similar, that are described herein. In some embodiments, the processing circuitry 12 of the client node 10 may be configured to control the communications interface 16 of the client node 10 to transmit and/or receive any messages, requests, responses, indications, information, data, notifications, signals, or similar, that are described herein.

Although the client node 10 is illustrated in Figure 1 as comprising a single memory 14, it will be appreciated that the client node 10 may comprise at least one memory (i.e. a single memory or a plurality of memories) 14 that operate in the manner described herein. Similarly, although the client node 10 is illustrated in Figure 1 as comprising a single communications interface 16, it will be appreciated that the client node 10 may comprise at least one communications interface (i.e. a single communications interface or a plurality of communications interface) 16 that operate in the manner described herein. It will also be appreciated that Figure 1 only shows the components required to illustrate an embodiment of the client node 10 and, in practical implementations, the client node 10 may comprise additional or alternative components to those shown.

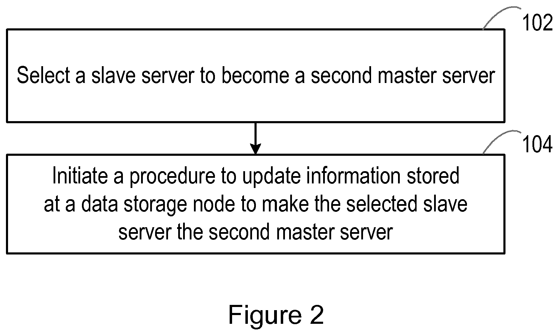

**Figure 2** is a flowchart illustrating a method performed by a client node 10 in accordance with an embodiment. The method is for managing a set of servers of the network. The client node 10 described earlier with reference to Figure 1 is configured to operate in accordance with the method of Figure 2. The method can be performed by or under the control of the processing circuitry 12 of the client node 10.

As illustrated at block 102 of Figure 2, in response to a determination that a first replica of a data element stored at a first (or old) master server of the set of servers is unreachable, a slave server of the set of servers, at which a second replica of the data element is stored, is selected to become a second (or new) master server of the set of servers. More specifically, the processing circuitry 12 of the client node 10 selects the slave server that is to become the second master server.

In some embodiments, the determination that the first replica of the data element stored at the first master server is unreachable may be made from the client node 10 learning about service degradation with regard to the first replica of the data element stored at the first master node. For example, this may the determination may be made passively when the client node 10 attempts to update the first replica of the data element stored at the first master node and this fails, e.g. due to the first master node being unavailable. Alternatively, for example, the determination may be made actively via a health check mechanism in respect of the first replica of the data element stored at the first master node. A person skilled in the art will be aware of various techniques that can be used for the determination that the first replica of a data element stored at the first master server is unreachable.

In some embodiments, selecting a slave server may comprise randomly selecting a slave server of the set of servers, at which a second replica of the data element is stored, to become the second master server of the set of servers. In other embodiments, selecting a slave server may comprise selecting a slave server of the set of servers, at which a second replica of the data element is stored, that is closest (e.g. in access latency) to the client node 10 to become the second master server of the set of servers. In yet other embodiments, selecting a slave server may comprise selecting a slave server of the set of servers, at which a second replica of a latest version of the data element is stored, to become the second master server of the set of servers.

At block 104 of Figure 2, a procedure is initiated to update information stored at a data storage node of the network that is indicative of which of the set of servers is a master server and which of the set of servers is a slave server to make the selected slave server the second master server. That is, the slave elevation procedure is initiated. More specifically, the processing circuitry 12 of the client node 10 initiates the slave elevation procedure. Herein, the term "initiate" can mean, for example, cause or establish. Thus, the processing circuitry 12 of the client node 10 can be configured to itself perform the slave elevation procedure or can be configured to cause another entity (e.g. another node or a server) of the network to perform the slave elevation procedure.

Although not illustrated in Figure 2, in some embodiments, the method may comprise initiating transmission of a request toward the first master server to update the first replica of the data element. More specifically, the processing circuitry 12 of the client node 10 can be configured to initiate transmission of the request to update the first replica of the data element according to some embodiments. The processing circuitry 12 of the client node 10 can be configured to itself transmit (e.g. via the communications interface 16 of the client node 10) the request to update the first replica of the data element or can be configured to cause another entity (e.g. another node or a server) of the network to transmit the request to update the first replica of the data element. In some of these embodiments, the determination that the first replica of the data element is unreachable may be following such a request to update the first replica of the data element.

Although also not illustrated in Figure 2, in some embodiments, the method may comprise initiating transmission of a request toward the data storage node to lock the data element. More specifically, the processing circuitry 12 of the client node 10 can be configured to initiate transmission of the request to lock the data element according to some embodiments. The processing circuitry 12 of the client node 10 can be configured to itself transmit (e.g. via the communications interface 16 of the client node 10) the request to lock the data element or can be configured to cause another entity (e.g. another node or a server) of the network to transmit the request to lock the data element. The request to lock the data element may be transmitted prior the selection of the slave server at block 102 of Figure 2. In some embodiments, the selection of the slave server at block 102 of Figure 2 and initiation of the procedure to update information stored at the data storage node at block 104 of Figure 2 may be in response to a successful locking of the data element.

In some embodiments, in response to an unsuccessful locking of the data element, transmission of the request may be initiated toward the first master server to update the first replica of the data element. More specifically, the processing circuitry 12 of the client node 10 may be configured to initiate transmission of the request to update the first replica of the data element in response to an unsuccessful locking of the data element according to some embodiments. As mentioned earlier, the processing circuitry 12 of the client node 10 can be configured to itself transmit (e.g. via the communications interface 16 of the client node 10) the request to update the first replica of the data element or can be configured to cause another entity (e.g. another node or a server) of the network to transmit the request to update the first replica of the data element. The processing circuitry 12 of the client node 10 may keep trying to update the first replica of the data element in this way. Alternatively or in addition, in response to an unsuccessful locking of the data element, an update of the first replica of the data element may be aborted (or abandoned). More specifically, the processing circuitry 12 of the client node 10 may be configured to abort (or abandon) the update of the first replica of the data element according to some embodiments. The client node 10 may use its discretion on whether to continue trying or whether to abandon the update of the first replica of the data element.

Although also not illustrated in Figure 2, in some embodiments, the method may comprise initiating transmission of a request toward the second master server to update the second replica of the data element. More specifically, the processing circuitry 12 of the client node 10 may be configured to initiate transmission of the request to update the second replica of the data element. The processing circuitry 12 of the client node 10 can be configured to itself transmit (e.g. via the communications interface 16 of the client node 10) the request to update the second replica of the data element or can be configured to cause another entity (e.g. another node or a server) of the network to transmit the request to update the second replica of the data element. In some embodiments, initiating the transmission of the request to update the second replica of the data element may be in response to a notification (e.g. a message) that the procedure to make the slave server the second master server (i.e. the slave elevation procedure) is successful. In some embodiments, the processing circuitry 12 of the client node 10 may be configured to refresh (or re-query) the replicas of the data element before proceeding with an update operation.

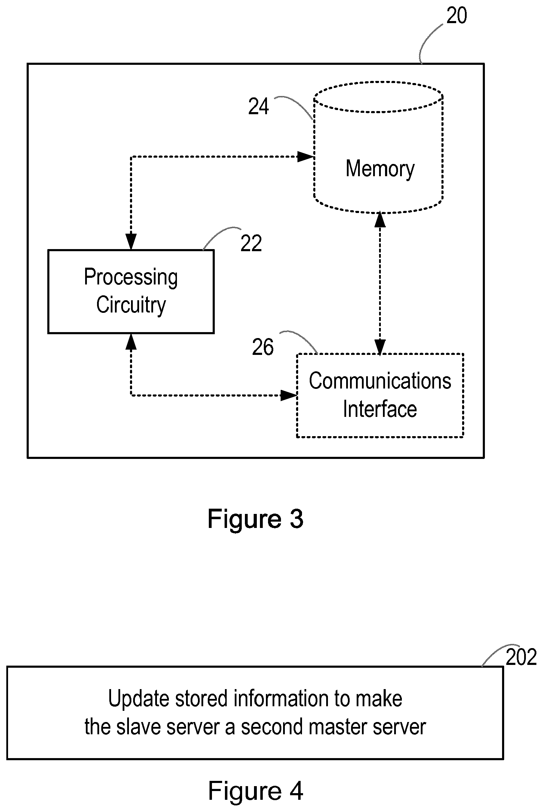

**Figure** 3 illustrates a data storage node 20 of a network in accordance with an embodiment. The data storage node 20 is for managing a set of servers of the network. The data storage node 20 may be assumed to implement a distributed consensus algorithm that is reachable from all client nodes.

As illustrated in Figure 3, the data storage node 20 comprises processing circuitry (or logic) 22. The processing circuitry 22 controls the operation of the data storage node 20 and can implement the method described herein. The processing circuitry 22 can comprise one or more processors, processing units, multi-core processors or modules that are configured or programmed to control the data storage node 20 in the manner described herein. In particular implementations, the processing circuitry 22 of the data storage node 20 can comprise a plurality of software and/or hardware modules that are each configured to perform, or are for performing, individual or multiple steps of the method described herein.

Briefly, the processing circuitry 22 of the data storage node 20 is configured to, in response to a determination that a first replica of a data element stored at a first (or old) master server of the set of servers is unreachable, select a slave server of the set of servers, at which a second replica of the data element is stored, to become a second (or new) master server of the set of servers. The processing circuitry 22 of the data storage node 20 is also configured to initiate a procedure to update information stored at a data storage node of the network, that is indicative of which of the set of servers is a master server and which of the set of servers is a slave server, to make the selected slave server the second master server.

As illustrated in Figure 3, in some embodiments, the data storage node 20 may optionally comprise a memory 24. The memory 24 of the data storage node 20 can comprise a volatile memory or a non-volatile memory. In some embodiments, the memory 24 of the data storage node 20 may comprise a non-transitory media. Examples of the memory 24 of the data storage node 20 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 22 of the data storage node 20 can be connected to the memory 24 of the data storage node 20. In some embodiments, the memory 24 of the data storage node 20 may be for storing program code or instructions which, when executed by the processing circuitry 22 of the data storage node 20, cause the data storage node 20 to operate in the manner described herein in respect of the data storage node 20. For example, in some embodiments, the memory 24 of the data storage node 20 may be configured to store program code or instructions that can be executed by the processing circuitry 22 of the data storage node 20 to cause the data storage node 20 to operate in accordance with the method described herein in respect of the data storage node 20.

Alternatively or in addition, the memory 24 of the data storage node 20 can be configured to store any messages, requests, responses, indications, information, data, notifications, signals, or similar, that are described herein. The processing circuitry 22 of the data storage node 20 may be configured to control the memory 24 of the data storage node 20 to store any messages, requests, responses, indications, information, data, notifications, signals, or similar, that are described herein.

In more detail, the memory 24 of the data storage node 20 is configured to store information (e.g. a replica set) indicative of which of the set of servers is a master server and which of the set of servers is a slave server. This stored information can be specific to the data element. In some embodiments, the memory 24 of the data storage node 20 can be configured to store such information for a plurality of data elements, e.g. each data element. In some embodiments, the memory 24 of the data storage node 20 can be configured to keep track of the actual master server for each data element. In some embodiments, the memory 24 of the data storage node 20 can be configured to provide (consistent) storage of data elements and (e.g. pointers to) corresponding replica locations, e.g. mappings of data elements to their corresponding replica locations.

In some embodiments, the data storage node 20 can be configured to store (e.g. replicated) data elements. These data elements can be stored on behalf of client nodes. In some of these embodiments, the data storage node 20 may allow multiple clients to access the same data element, e.g. for reading and/or writing (i.e. updating). In some embodiments, during read operations, clients can select any of the (e.g. replicated) data elements, slave servers, or master servers to access. In some embodiments, during write (or update) operations, the client node 10 may first change the master replica of a data element stored at the current master server and update of the master replica of the data element further updates the replicas of the data element stored at the slave servers. The data storage node 20 can be configured to maintain data elements consistently across the set of servers.

In some embodiments, in order to access a data element, the client node 10 may first establish the location of the data element via a look-up procedure using the data storage node 20. During this look-up procedure, the client node 10 may request the location from the data storage node 20, which can be configured to keep track of the locations of the replicas of the data element. This can allow for further optimisations. Most notably, it allows for the ability to place any replica of a data element to an optimum location (e.g. at the closest server to the client node 10 if only one client node 10 is attempting to access the data element). This can be especially advantageous when implementing a key-element store as the data storage node 20, which follows a key-location-data separation design principle.

In some embodiments, as illustrated in Figure 3, the data storage node 20 may optionally comprise a communications interface 26. The communications interface 26 of the data storage node 20 can be connected to the processing circuitry 22 of the data storage node 20 and/or the memory 24 of data storage node 20. The communications interface 26 of the data storage node 20 may be operable to allow the processing circuitry 22 of the data storage node 20 to communicate with the memory 24 of the data storage node 20 and/or vice versa. Similarly, the communications interface 26 of the data storage node 20 may be operable to allow the processing circuitry 22 of the data storage node 20 to communicate with the client node 10, the slave server, and/or any other node or server of the network. The communications interface 26 of the data storage node 20 can be configured to transmit and/or receive any messages, requests, responses, indications, information, data, notifications, signals, or similar, that are described herein. In some embodiments, the processing circuitry 22 of the data storage node 20 may be configured to control the communications interface 26 of the data storage node 20 to transmit and/or receive any messages, requests, responses, indications, information, data, notifications, signals, or similar, that are described herein.

Although the data storage node 20 is illustrated in Figure 3 as comprising a single memory 24, it will be appreciated that the data storage node 20 may comprise at least one memory (i.e. a single memory or a plurality of memories) 24 that operate in the manner described herein. Similarly, although the data storage node 20 is illustrated in Figure 3 as comprising a single communications interface 26, it will be appreciated that the data storage node 20 may comprise at least one communications interface (i.e. a single communications interface or a plurality of communications interface) 26 that operate in the manner described herein. It will also be appreciated that Figure 3 only shows the components required to illustrate an embodiment of the data storage node 20 and, in practical implementations, the data storage node 20 may comprise additional or alternative components to those shown.

**Figure 4** is a flowchart illustrating a method performed by a data storage node 20 in accordance with an embodiment. The method is for managing a set of servers of the network. The set of servers comprise a first (or old) master server at which a first replica of a data element is stored and a slave server at which a second replica of the data element is stored. The data storage node 20 described earlier with reference to Figure 3 is configured to operate in accordance with the method of Figure 4. The method can be performed by or under the control of the processing circuitry 22 of the data storage node 20.

As illustrated at block 202 of Figure 4, in response to a request from the slave server to update the stored information to make the slave server a second (or new) master server of the set of servers, the stored information is updated to make the slave server the second master server of the set of servers. More specifically, the processing circuitry 22 of the data storage node 20 updates the stored information in this way. For example, the processing circuitry 22 of the data storage node 20 may be configured to change a replica set stored at the data storage node 20 to make the slave server the second master server.

Although not illustrated in Figure 4, in some embodiments, the method may comprise initiating transmission of a notification (e.g. a message) toward the slave server indicative of whether the procedure to make the slave server the second master server is successful or unsuccessful. More specifically, the processing circuitry 22 of the data storage node 20 can be configured to initiate transmission of the notification indicative of whether the procedure to make the slave server the second master server is successful or unsuccessful according to some embodiments. The processing circuitry 22 of the data storage node 20 can be configured to itself transmit (e.g. via the communications interface 26 of the data storage node 20) the notification indicative of whether the procedure to make the slave server the second master server is successful or unsuccessful or the processing circuitry 22 of the data storage node 20 can be configured to cause another entity (e.g. another node or a server) of the network to transmit the notification indicative of whether the procedure to make the slave server the second master server is successful or unsuccessful.

Although also not illustrated in Figure 4, in some embodiments, in response to a request from a client node 10 to lock the data element, the method may comprise deciding whether to lock (or deciding whether to issue or deny the request to lock) the data element. More specifically, the processing circuitry 22 of the data storage node 20 can be configured to decide whether to lock the data element in response to a request from a client node 10 to lock the data element according to some embodiments. The decision whether to lock the data element may be taken prior to the update of the stored information at block 202 of Figure 4 to make the slave server the second master server of the set of servers. In some embodiments, the decision whether to lock the data element may be based on whether there is an asymmetric partitioning of the set of servers in which the first master server is unreachable while other servers of the set of servers are reachable and/or a length of time since a last update to make a slave server a master server.

In some embodiments, the processing circuitry 22 of the data storage node 20 can be configured to employ a mechanism to avoid unnecessary execution of the slave elevation procedure. For example, if the processing circuitry 22 of the data storage node 20 can detect that the client node 10 requesting the lock is actually experiencing an asymmetric network partitioning (i.e. the client node 10 cannot reach the master replica even though all other nodes can reach each other), the request to lock the data element may be denied. The request to lock the data element may be denied in the usual way or with a descriptive message explaining the denial to the client. This descriptive message may be forwarded to a user application running on the client node 10 in some embodiments. In some embodiments, the request to lock the data element may be denied if there has been less than a predefined time period since the last request to lock the data element. For example, a timestamp of a previous slave elevation procedure may be logged and the request to lock the data element may be denied if such a request is received too soon afterwards.

In some embodiments involving a decision as to whether to lock the data element, the method may also comprise initiating transmission of a notification (e.g. a message) indicative of whether the locking of the data element is successful or unsuccessful. More specifically, the processing circuitry 22 of the data storage node 20 can be configured to initiate transmission of the notification indicative of whether the locking of the data element is successful or unsuccessful according to some embodiments. The processing circuitry 22 of the data storage node 20 can be configured to itself transmit (e.g. via the communications interface 26 of the data storage node 20) the notification indicative of whether the locking of the data element is successful or unsuccessful or can be configured to cause another entity (e.g. another node or a server) of the network to transmit the notification indicative of whether the locking of the data element is successful or unsuccessful. The notification indicative of whether the locking of the data element is successful or unsuccessful can be transmitted toward the client node 10, e.g. either directly or via the slave server. In the case of unsuccessful locking, the notification may be an error message. In some of embodiments where the data element is not locked, the slave elevation procedure may stop.

In some embodiments where the data element is locked, the data element can remain locked during the slave elevation procedure. The data element can be uniquely locked to the client node 10. In this way, only a single update operation can happen for the same data element at a time. A person skilled in the art will be aware of various locking mechanisms that may be used to lock the data element. In some embodiments, the locking mechanism used may depend on requirements of a user application running on the client node 10.

In some embodiments where the data element is locked, the method may comprise unlocking (or removing the lock from) the data element, e.g. once the slave elevation procedure is complete and/or upon expiry of a predetermined time period. More specifically, the processing circuitry 22 of the data storage node 20 can be configured to unlock the data element in this way according to some embodiments. For example, the processing circuitry 22 of the data storage node 20 can be configured to issue timed locks according to some embodiments. These timed locks may automatically unlock after expiration of a pre-set timer. The pre-set may be a system wide constant, or requested by the client node 10, or set on a per data element basis. This provides a measure to prevent client nodes that are unable to finish their slave elevation procedure from blocking other client nodes from initiating the same on the same data element. If the timer is too low, a more reactive and possibly resource-consuming system behaviour may emerge, in that multiple parallel slave elevations may possibly run for the same data element. If the timer is too high, the slave elevation may be delayed if the first slave cannot finish it for any reason. It is noted that data element inconsistencies are prevented as updating replica locations is performed at the data storage node 20.

Although also not illustrated in Figure 4, in some embodiments, the method may comprise updating the stored information to make the first master server a slave server of the set of servers in response to a request from the slave server to update the stored information to make the first master server a slave server of the set of servers. More specifically, the processing circuitry 22 of the data storage node 20 can be configured to update the stored information in this way. For example, the processing circuitry 22 of the data storage node 20 may be configured to change a replica set stored at the data storage node 20 to make the first master server a slave server. In some embodiments, the first master server may be made a slave server even though it is unreachable. Once the first master server becomes reachable, the first master server may update (or catch up) the replica of the data element that it is storing. In this way, the full replication count can be restored.

Thus, in some embodiments, the first master server is made a slave server (when another slave server becomes the second master server). In this way, there may only be one master server at a time according to some embodiments. That is, the master role can be exclusive. In other such embodiments, the first master server may be dropped from the set of servers altogether. In some of these embodiments, an additional (or new) replica of the data element may be created on a reachable slave server. In this way, the same replica count for the data element can be maintained.

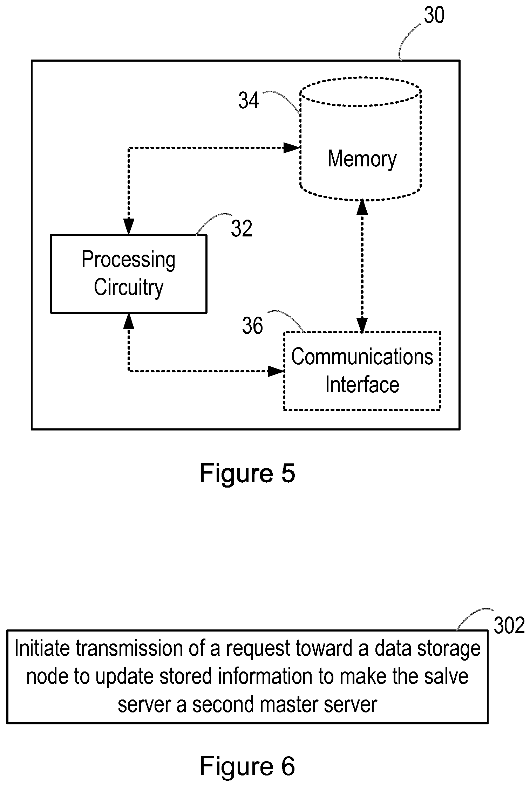

**Figure 5** illustrates a slave server 30 of a network in accordance with an embodiment. The slave server 30 is for managing a set of servers of the network.

As illustrated in Figure 5, the slave server 30 comprises processing circuitry (or logic) 32. The processing circuitry 32 controls the operation of the slave server 30 and can implement the method described herein. The processing circuitry 32 can comprise one or more processors, processing units, multi-core processors or modules that are configured or programmed to control the slave server 30 in the manner described herein. In particular implementations, the processing circuitry 32 of the slave server 30 can comprise a plurality of software and/or hardware modules that are each configured to perform, or are for performing, individual or multiple steps of the method described herein.

Briefly, the processing circuitry 32 of the slave server 30 is configured to, in response to a determination that a first replica of a data element stored at a first (or old) master server of the set of servers is unreachable, select a slave server of the set of servers, at which a second replica of the data element is stored, to become a second (or new) master server of the set of servers. The processing circuitry 32 of the slave server 30 is also configured to initiate a procedure to update information stored at a data storage node of the network, that is indicative of which of the set of servers is a master server and which of the set of servers is a slave server, to make the selected slave server the second master server.

As illustrated in Figure 5, in some embodiments, the slave server 30 may optionally comprise a memory 34. The memory 34 of the slave server 30 can comprise a volatile memory or a non-volatile memory. In some embodiments, the memory 34 of the slave server 30 may comprise a non-transitory media. Examples of the memory 34 of the slave server 30 include, but are not limited to, a random access memory (RAM), a read only memory (ROM), a mass storage media such as a hard disk, a removable storage media such as a compact disk (CD) or a digital video disk (DVD), and/or any other memory.

The processing circuitry 32 of the slave server 30 can be connected to the memory 34 of the slave server 30. In some embodiments, the memory 34 of the slave server 30 may be for storing program code or instructions which, when executed by the processing circuitry 32 of the slave server 30, cause the slave server 30 to operate in the manner described herein in respect of the slave server 30. For example, in some embodiments, the memory 34 of the slave server 30 may be configured to store program code or instructions that can be executed by the processing circuitry 32 of the slave server 30 to cause the slave server 30 to operate in accordance with the method described herein in respect of the slave server 30. Alternatively or in addition, the memory 34 of the slave server 30 can be configured to store any messages, requests, responses, indications, information, data, notifications, signals, or similar, that are described herein. The processing circuitry 32 of the slave server 30 may be configured to control the memory 34 of the slave server 30 to store any messages, requests, responses, indications, information, data, notifications, signals, or similar, that are described herein.

In some embodiments, as illustrated in Figure 5, the slave server 30 may optionally comprise a communications interface 36. The communications interface 36 of the slave server 30 can be connected to the processing circuitry 32 of the slave server 30 and/or the memory 34 of slave server 30. The communications interface 36 of the slave server 30 may be operable to allow the processing circuitry 32 of the slave server 30 to communicate with the memory 34 of the slave server 30 and/or vice versa. Similarly, the communications interface 36 of the slave server 30 may be operable to allow the processing circuitry 32 of the slave server 30 to communicate with the client node 10, the data storage node 20, and/or any other node or server of the network. The communications interface 36 of the slave server 30 can be configured to transmit and/or receive any messages, requests, responses, indications, information, data, notifications, signals, or similar, that are described herein. In some embodiments, the processing circuitry 32 of the slave server 30 may be configured to control the communications interface 36 of the slave server 30 to transmit and/or receive any messages, requests, responses, indications, information, data, notifications, signals, or similar, that are described herein.

Although the slave server 30 is illustrated in Figure 5 as comprising a single memory 34, it will be appreciated that the slave server 30 may comprise at least one memory (i.e. a single memory or a plurality of memories) 34 that operate in the manner described herein. Similarly, although the slave server 30 is illustrated in Figure 5 as comprising a single communications interface 36, it will be appreciated that the slave server 30 may comprise at least one communications interface (i.e. a single communications interface or a plurality of communications interface) 36 that operate in the manner described herein. It will also be appreciated that Figure 5 only shows the components required to illustrate an embodiment of the slave server 30 and, in practical implementations, the slave server 30 may comprise additional or alternative components to those shown.

**Figure 6** is a flowchart illustrating a method performed by a slave server 30 in accordance with an embodiment. The method is for managing a set of servers of the network. The set of servers comprise a first (or old) master server at which a first replica of a data element is stored and the slave server at which a second replica of the data element is stored. The slave server 30 described earlier with reference to Figure 5 is configured to operate in accordance with the method of Figure 6. The method can be performed by or under the control of the processing circuitry 32 of the slave server 30.

As illustrated at block 302 of Figure 6, in response to initiation of a procedure by a client node 10 to update information stored at a data storage node 20 of the network, that is indicative of which of the set of servers is a master server and which of the set of servers is a slave server, to make the slave server 30 a second (or new) master server of the set of servers, transmission of a request is initiated toward the data storage node 20 to update the information stored at the data storage node 20 to make the slave server 30 the second master server of the set of servers. More specifically, the processing circuitry 32 of the slave server 30 initiates transmission of the request to update the information stored at the data storage node 20 to make the slave server 30 the second master server of the set of servers. The processing circuitry 32 of the slave server 30 can be configured to itself transmit (e.g. via the communications interface 36 of the slave server 30) the request to update the information stored at the data storage node 20 to make the slave server 30 the second master server of the set of servers or can be configured to cause another entity (e.g. another node or a server) of the network to transmit the request to update the information stored at the data storage node 20 to make the slave server 30 the second master server of the set of servers.

Although not illustrated in Figure 6, in some embodiments, the method may comprise initiating transmission of a notification (e.g. a message) toward the client node 10 indicative of whether the procedure to make the slave server the second master server is successful or unsuccessful. More specifically, the processing circuitry 32 of the slave server 30 can be configured to initiate transmission of the notification indicative of whether the procedure to make the slave server the second master server is successful or unsuccessful according to some embodiments. The processing circuitry 32 of the slave server 30 can be configured to itself transmit (e.g. via the communications interface 36 of the slave server 30) the notification indicative of whether the procedure to make the slave server the second master server is successful or unsuccessful or can be configured to cause another entity (e.g. another node or a server) of the network to transmit the notification indicative of whether the procedure to make the slave server the second master server is successful or unsuccessful.

Although also not illustrated in Figure 6, in some embodiments, the method may comprise initiating transmission of a request toward the data storage node 20 to update the information stored at the data storage node 20 to make the first master server a slave server of the set of servers. More specifically, the processing circuitry 32 of the slave server 30 can be configured to initiate transmission of the request to update the information stored at the data storage node 20 to make the first master server a slave server according to some embodiments. The processing circuitry 32 of the slave server 30 can be configured to itself transmit (e.g. via the communications interface 36 of the slave server 30) the request to update the information stored at the data storage node 20 to make the first master server a slave server or can be configured to cause another entity (e.g. another node or a server) of the network to transmit the request to update the information stored at the data storage node 20 to make the first master server a slave server.

Although also not illustrated in Figure 6, in some embodiments, the method may comprise attempting to update the second replica of the data element in response to a request from the client node 10 to update the second replica of the data element. More specifically, the processing circuitry 32 of the slave server 30 can be configured to attempt to update the second replica of the data element according to some embodiments.

Although also not illustrated in Figure 6, in some embodiments, the method may comprise initiating transmission of a request toward the second master server to update the second replica of the data element in response to a determination that a majority of replicas of the data element stored at the second master server are reachable. More specifically, the processing circuitry 32 of the slave server 30 can be configured to initiate transmission of the request to update the second replica of the data element in this way according to some embodiments. The processing circuitry 32 of the slave server 30 can be configured to itself transmit (e.g. via the communications interface 36 of the slave server 30) the request to update the second replica of the data element or can be configured to cause another entity (e.g. another node or a server) of the network to transmit the request to update the second replica of the data element.

Although also not illustrated in Figure 6, in some embodiments, the method may comprise attempting to reach a majority of replicas of the data element stored at the second master server in response to a determination that a minority of replicas of the data element stored at the second master server are reachable. More specifically, the processing circuitry 32 of the slave server 30 can be configured to attempt to reach a majority of replicas of the data element stored at the second master server in this way according to some embodiments.

Alternatively or in addition, in some embodiments, the method may comprise waiting for an indication that a majority of replicas of the data element stored at the second master server have become available in response to a determination that a minority of replicas of the data element stored at the second master server are reachable. More specifically, the processing circuitry 32 of the slave server 30 can be configured to wait for an indication that a majority of replicas of the data element stored at the second master server have become available in this way according to some embodiments.

Alternatively or in addition, in some embodiments, the method may comprise initiating transmission of an error message toward the client node 10 in response to a determination that a minority of replicas of the data element stored at the second master server are reachable. More specifically, the processing circuitry 32 of the slave server 30 can be configured to initiate transmission of an error message toward the client node 10 in this way according to some embodiments. The processing circuitry 32 of the slave server 30 can be configured to itself transmit (e.g. via the communications interface 36 of the slave server 30) the error message or can be configured to cause another entity (e.g. another node or a server) of the network to transmit the error message.

In some embodiments, a majority of replicas of the data element stored at the second master server referred to herein may be at least half of the replicas of the data element stored at the second master server. In some embodiments, a minority of replicas of the data element stored at the second master server referred to herein may be less than half of the replicas of the data element stored at the second master server.

Although also not illustrated in Figure 6, in some embodiments, replicas of the data element in the remaining slave servers may be synchronized. After synchronization, all replicas of the data element hold the same content. In some embodiments, the method may comprise initiating a procedure to synchronise the second replica of the data element stored at the second master server and replicas of the data element stored at other slave servers of the set of slave servers. More specifically, the processing circuitry 32 of the slave server 30 can be configured to initiate the procedure to synchronise. The processing circuitry 32 of the slave server 30 can be configured to itself perform the synchronisation procedure or cause another entity (e.g. another node or a server) of the network to perform the synchronisation procedure. In some embodiments involving a synchronisation procedure, the procedure to synchronise is initiated while the data element is locked, e.g. in the manner described earlier.

In some embodiments, initiating a procedure to synchronise may comprise checking which of the second replica of the data element stored at the second master server and the replicas of the data element stored at other slave servers of the set of slave servers is the latest replica of the data element and initiating a procedure to synchronise the second replica of the data element stored at the second master server and the replicas of the data element stored at other slave servers of the set of slave servers with the latest replica of the data element.

In more detail, in some embodiments, the processing circuitry 32 of the slave server 30 may be configured to query the data element and the timestamp indicative of the time of writing (or updating) the data element for each of the other slave servers. In these embodiments, the processing circuitry 32 of the slave server 30 can be configured to compare the data elements and the timestamps for the other slave servers to the second replica of the data element that it has stored. The processing circuitry 32 of the slave server 30 can be configured to select the most recently written (or most recently updated) replica of the data element. The processing circuitry 32 of the slave server 30 can be configured to communicate the selected replica of the data element (and its timestamp) to the other slave servers. In some embodiments, the timestamp may be substituted with a version number that is increased whenever the second (master) replica of the data element is written (or updated).

In some embodiments, the method described earlier may be repeated in respect of the second master node, e.g. in response to a determination that the second replica of the data element stored at the second master server of the set of servers is unreachable.

There is also provided a network comprising one or more client nodes 10 as described earlier with reference to Figures 1 and 2, one or more data storage nodes 20 as described earlier with reference to Figures 3 and 4, and/or one or more slave servers 30 as described earlier with reference to Figures 5 and 6.

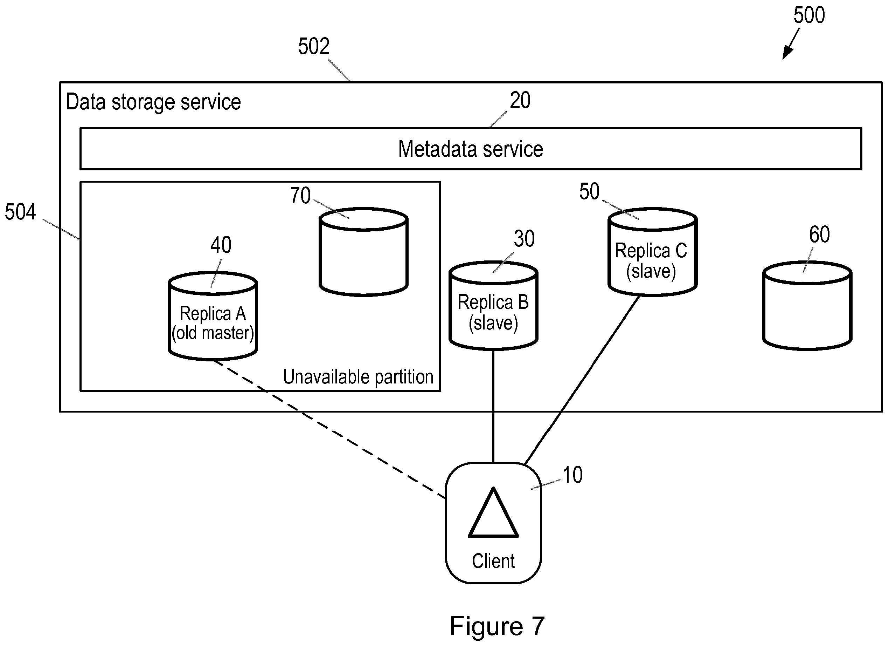

**Figure 7** is a block diagram illustrating such a network 500 according to an embodiment. As illustrated in Figure 7, the network 500 comprises a client node 10 as described earlier with reference to Figure 1, a data storage (or metadata service) node 20 as described earlier with reference to Figure 3, and a first slave server 30 as described earlier with reference to Figure 5. The client node 10 of the network 500 operates in accordance with the method described earlier with reference to Figure 2, the data storage node 20 of the network 500 operates in accordance with the method described earlier with reference to Figure 4, and the first slave server 30 operates in accordance with the method described earlier with reference to Figure 6.

In the embodiment illustrated in Figure 7, the network 500 also comprises a first (or old) master server 40, a second slave server 50, a third slave server 60, and a fourth slave server 70. Thus, the network 500 illustrated in Figure 7 comprises a set of servers 30, 40, 50, 60, 70. Although there are five servers 30, 40, 50, 60, 70 in the set of servers illustrated in Figure 7, it will be understood that the network 500 may comprise any other number of servers. The data storage node 20, the first slave server 30, the first master server 40, the second slave server 50, the third slave server 60, and the fourth slave server 70 are part of a data storage service 502 in the embodiment illustrated in Figure 7. Thus, the data storage service 502 has two components; the first being the data storage node 20 and the second being the set of servers 30, 40, 50, 60, 70.

As described earlier, the data storage node 20 stores the information indicative of which of the set of servers is a master server and which of the set of servers is a slave server and may also store other information. The set of servers 30, 40, 50, 60, 70 each store replicas of data elements. The first master server 40 stores a master replica (Replica A) of a data element. The first slave server 30 stores another replica (Replica B) of the data element and the second slave server 50 stores yet another replica (Replica C) of the data element. Thus, the replicas of the data element are distributed on a plurality of servers. In some embodiments, the data storage node 20 can be co-located with the set of servers 30, 40, 50, 60, 70.

During a failure scenario, some data elements of the data storage node 20 may become unreachable for the client node 10. This means that the client node 10 is unable to exchange remote protocol messages with those data elements. In the embodiment illustrated in Figure 7, there are two partitions and one of these partitions 504 is unreachable (e.g. unavailable). When the client node 10 is connected to an unreachable partition 504, it is said to be in minority, e.g. having access to less than half of the replicas of the data element. The unreachable partition 504 has the first master server 40 at which the master replica of a data element is stored. Thus, the first master server 40 is unreachable and the data element cannot be updated. In this situation, the client node 10 is not able to proceed with updating the data element until the partitions are reunited, e.g. the client node 10 may need to actively retry to reach the majority of replicas, or wait passively for an external trigger informing it that the service is restored, or signal an error to its user application.

Thus, when the client node 10 becomes aware of this situation, the client node 10 initiates the slave elevation procedure described earlier to make the first slave server 30 (or the second slave server 50), at which another replica of the data element is stored, the second (or new) master server. That is, the methods described earlier with reference to Figures 2, 4 and 6 are performed by the client node 10, the data storage node 20 and the first slave server 30 respectively. In this way, a data service can proceed in a partitioned master-slave replication system when the majority of replicas of the data element are reachable for a client node 10 even if the master replica of the data element is not.

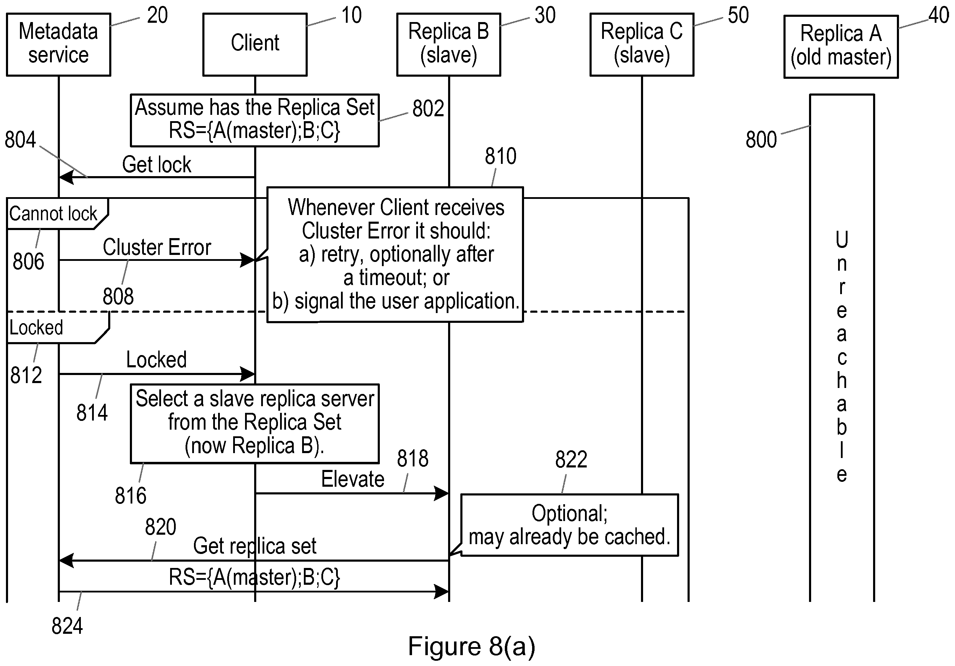

**Figure 8(a)****-(b)** is a signalling (or call flow) diagram illustrating an exchange of signals in an example embodiment. The exchange of signals is in a network, such as the network 500 illustrated in Figure 7.

The network illustrated in Figure 8(a)-(b) comprises a client node 10 as described earlier with reference to Figure 1 and a data storage (or metadata service) node 20 as described earlier with reference to Figure 3. The network illustrated in Figure 8(a)-(b) comprises a set of servers 30, 40, 50. The set of servers comprises a first (or old) master server 40 at which a first replica (Replica A) of a data element is stored. The first replica (Replica A) of the data element stored at the first master server 40 is the master replica of the data element. The set of servers also comprises a first slave server 30 as described earlier with reference to Figure 5 at which a second replica (Replica B) of the data element is stored and a second slave server 50 as described earlier with reference to Figure 5 at which a third replica (Replica C) of the data element is stored. The data storage node 20 stores information indicative of which of the set of servers is a master server and which of the set of servers is a slave server.

As illustrated by block 800 of Figure 8(a)-(b), the first master server 40 is unreachable. As illustrated by block 802 of Figure 8(a), the client node 10 is aware that the set of servers comprise the first master server 40 at which the master replica (Replica A) of the data element is stored, a first slave server 30 at which another replica (Replica B) of the data element is stored and a second slave server 50 at which yet another replica (Replica C) of the data element is stored. Replicas A, B and C make up a replica set.

As illustrated by arrow 804 of Figure 8(a), in some embodiments, transmission of a request is initiated from the client node 10 toward the data storage node 20 to lock the data element. In response to this request from the client node 10 to lock the data element, the data storage node 20 may decide whether to lock the data element. The decision whether to lock the data element can be as described earlier. As illustrated by block 806 of Figure 8(a), it can be the case that the locking of the data element is unsuccessful. On the other hand, as illustrated by block 812 of Figure 8(a), it can be the case that locking of the data element is successful. As illustrated by arrows 808 and 814 of Figure 8(a), in some embodiments, transmission of a notification (e.g. a message) may be initiated from the data storage node 20 toward the client node 10 that is indicative of whether the locking of the data element is successful or unsuccessful.

As illustrated by arrow 808, if the locking of the data element is unsuccessful, the notification indicates that the locking of the data element is unsuccessful. For example, the notification may indicate an error. In response to an unsuccessful locking of the data element, as illustrated by block 810 of Figure 8(a), the client node 10 may initiate transmission of a request toward the first master server 40 to update the first replica of the data element (e.g. the client node 10 may retry the update, such as after a timeout) and/or abort (or abandon) an update of the first replica of the data element. In some embodiments, the client node 10 may signal a user application that it is running.

As illustrated by arrow 814, if the locking of the data element is successful, the notification indicates that the locking of the data element is successful. In the embodiment illustrated in Figure 8(a)-(b), the selection of a slave server to become a second (or new) master server of the set of servers and the initiation of the slave elevation procedure is in response to a successful locking of the data element.

Thus, as illustrated by block 816 of Figure 8(a), a slave server of the set of servers, at which a second replica of the data element is stored, is selected to become a second (or new) master server of the set of servers. In the embodiment illustrated in Figure 8(a)-(b), the first slave server 30 is selected to become the second master server. This selection of a slave server is in response to a determination that the first replica of the data element stored at the first master server 40 of the set of servers is unreachable. The selection of a slave server can be as described earlier.

As illustrated by arrow 818 of Figure 8(a), a procedure is initiated to update information stored at a data storage node 20 of the network, that is indicative of which of the set of servers is a master server and which of the set of servers is a slave server, to make the selected first slave server 30 the second master server. That is, the slave elevation procedure is initiated.

As illustrated by arrow 820 of Figure 8(a), in some embodiments, transmission of a request may be initiated from the first slave server 30 toward the data storage node 20 to retrieve the replica set. As illustrated by block 822 of Figure 8(a), in other embodiments, the replica set may already be cached at the first slave server 30. As illustrated by arrow 824 of Figure 8(a), in some embodiments, transmission of the replica set may be initiated from the data storage node 20 toward the first slave server 30 in response to the request to retrieve the replica set.

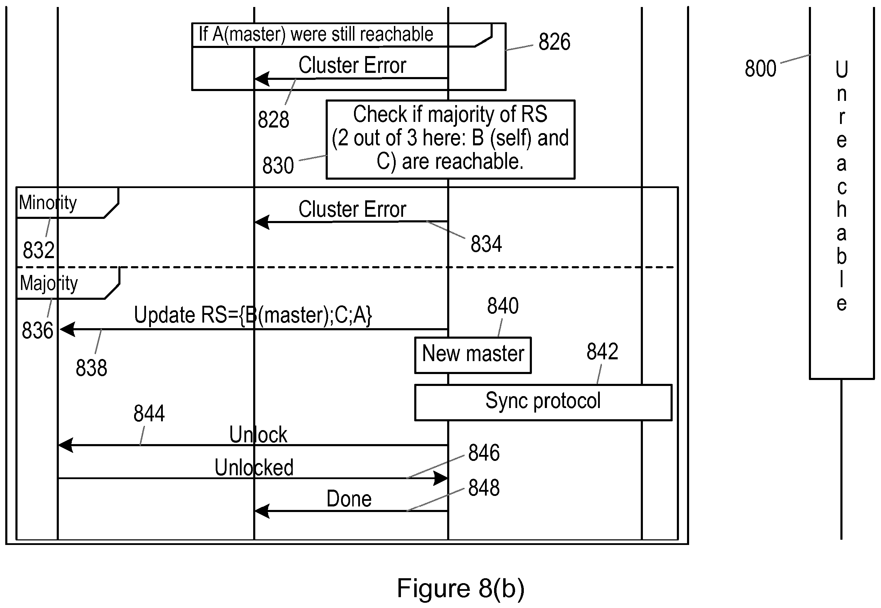

As illustrated by block 826 of Figure 8(b), it may be that the first master server 40 is still reachable. In this case, as illustrated by arrow 828 of Figure 8(b), transmission of an error message may be initiated from the first slave server 30 toward the client node 10.

As illustrated by block 830 of Figure 8(b), in some embodiments, the first slave server 30 may check whether a majority of replicas of the data element stored at the first slave server 30 are reachable. As illustrated by block 832 of Figure 8(b), in some embodiments, it may be the case that it is determined that only a minority of replicas of the data element stored at the first slave server 30 are reachable. As mentioned earlier, in some embodiments, a minority of replicas of the data element stored at the first slave server may be less than half of the replicas of the data element stored at the first slave server. As illustrated by arrow 834 of Figure 8(b), in some embodiments, transmission of an error message may be initiated from the first slave server 30 toward the client node 10 in response to a determination that only a minority of replicas of the data element stored at the first slave server 30 are reachable.

On the other hand, as illustrated by block 836 of Figure 8(b), in some embodiments, it may be the case that it is determined that a majority of replicas of the data element stored at the first slave server 30 are reachable. As mentioned earlier, in some embodiments, a majority of replicas of the data element stored at the first slave server may be at least half of the replicas of the data element stored at the first slave server. If it is determined that a majority of replicas of the data element stored at the first slave server 30 are reachable, the process moves to arrow 838 of Figure 8(b).

As illustrated by arrow 838 of Figure 8(b), in some embodiments, transmission of a request is initiated from the first slave server 30 toward the data storage node 20 to update the information stored at the data storage node 20 to make the first slave server 30 (which stores Replica B) the second master server of the set of servers. This is in response to the slave initiation procedure. In response to the request from the first slave server 30 to update the stored information to make the first slave server 30 the second master server of the set of servers, the stored information is updated to make the first slave server 30 the second master server of the set of servers. As illustrated by block 840 of Figure 8(b), the first slave server 30 becomes the second master server of the set of servers.

In some embodiments, transmission of a request may be initiated (e.g. at arrow 838 of Figure 8(b)) from the first slave server 30 toward the data storage node 20 to update the information stored at the data storage node 20 to make the first master server 40 (which stores Replica A) a slave server of the set of servers. In response to the request from the first slave server 30 to update the stored information to make the first master server 40 a slave server of the set of servers, the stored information may be updated to make the first master server 40 a slave server of the set of servers, such that there is only one master server.

As illustrated by block 842 of Figure 8(b), in some embodiments, a procedure may be initiated to synchronise the second replica of the data element stored at the first slave server 30 and replicas of the data element stored at other slave servers 50 of the set of slave servers. The procedure to synchronise can be as described earlier. The procedure to synchronise can be initiated while the data is locked.

As illustrated by arrow 844 of Figure 8(b), in some embodiments, transmission of a request may be initiated from the first slave server 30 toward the data storage node 20 to unlock the data element (e.g. on completion of the slave elevation procedure and/or upon expiry of a predetermined time period). A notification (e.g. a message) may be initiated from the data storage node 20 toward the client node 10 that is indicative of whether the locking of the data element is successful or unsuccessful. As illustrated by arrow 846 of Figure 8(b), if the unlocking of the data element is successful, the notification indicates that the unlocking of the data element is successful.

As illustrated by arrow 848 of Figure 8(b), in some embodiments, transmission of a notification may be initiated from the first slave server 30 toward the client node 10 indicative of whether the procedure to make the first slave server 30 the second master server is successful or unsuccessful.

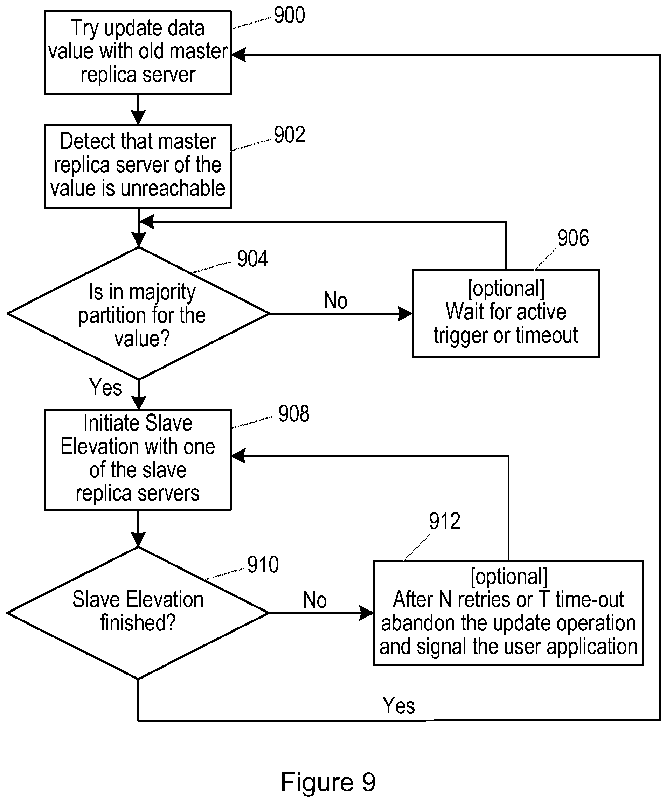

**Figure 9** is a flowchart illustrating an example method performed by a client node 10 of a network, such as the network 500 illustrated in Figure 7, in accordance with an embodiment. The client node 10 is as described earlier. The method is for managing a set of servers of the network.

As illustrated at block 900 of Figure 9, an attempt is made by the client node 10 to update a data element for which a first (master) replica is stored at a first master server 40. At block 902 of Figure 9, the client node 10 detects that the first master server 40 (and thus the first replica of the data element) of the set of servers is unreachable.

At block 904 of Figure 9, it is determined whether a majority of replicas of the data element stored at the first slave server 30 are reachable. As mentioned earlier, in some embodiments, a majority of replicas of the data element stored at the first slave server may be at least half of the replicas of the data element stored at the first slave server. If it is determined that a majority of replicas of the data element stored at the first slave server 30 are not reachable, the process moves to block 906 of Figure 9. At block 906 of Figure 9, the client node 10 may wait for an active trigger or a timeout before the process proceeds back to block 904 at which the determination as to whether a majority of replicas of the data element stored at the first slave server 30 are reachable is repeated.

Once it is determined that a majority of replicas of the data element stored at the first slave server 30 are reachable, the process moves to block 908 of Figure 9. At block 908 of Figure 9, the first slave server 30 of the set of servers, at which a second replica of the data element is stored, is selected to become a second master server of the set of servers and a procedure is initiated to update information stored at a data storage node 20 of the network, that is indicative of which of the set of servers is a master server and which of the set of servers is a slave server, to make the selected first slave server 30 the second master server. That is, the slave elevation procedure is initiated with the first slave server 30. This is in response to the determination at block 902 that the first replica of a data element stored at a first master server 40 of the set of servers is unreachable.

At block 910, it may be checked whether the slave elevation procedure has finished. If the slave elevation procedure is still ongoing, the process proceeds to block 912. At block 912, the update operation may be abandoned (e.g. after a predefined number N of retries or on expiry of a predefined time period T) before the process proceeds back to block 908 of Figure 9. In this case, a user application that the client node 10 is running may be signalled regarding the abandonment. Once the slave elevation procedure has finished, the process may proceed back to block 900 at which the process may be repeated in respect of the second master server.

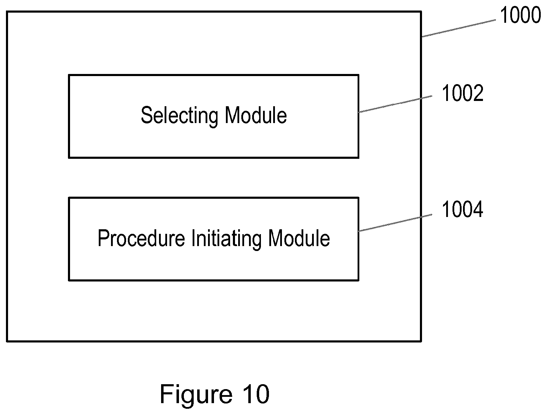

**Figure 10** is a block diagram illustrating a client node 1000 of a network for managing a set of servers of the network in accordance with an embodiment. The client node 1000 comprises a selecting module 1002 configured to, in response to a determination that a first replica of a data element stored at a first master server of the set of servers is unreachable, select a slave server of the set of servers, at which a second replica of the data element is stored, to become a second master server of the set of servers. The client node 1000 comprises a procedure initiating module 1004 configured to initiate a procedure to update information stored at a data storage node of the network, that is indicative of which of the set of servers is a master server and which of the set of servers is a slave server, to make the selected slave server the second master server. The client node 1000 may operate in the manner described herein.

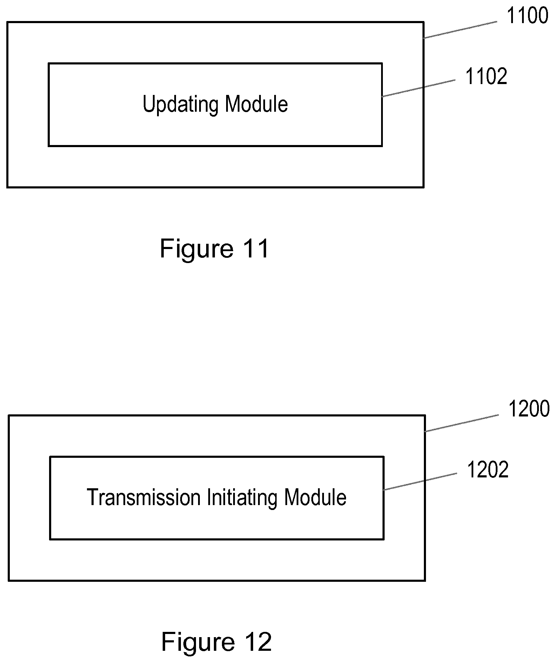

**Figure 11** is a block diagram illustrating a data storage node 1100 of a network for managing a set of servers of the network in accordance with an embodiment. The set of servers comprise a first master server at which a first replica of a data element is stored and a slave server at which a second replica of the data element is stored. The data storage node 1100 stores information indicative of which of the set of servers is a master server and which of the set of servers is a slave server. The data storage node 1100 comprises an updating module 1102 configured to, in response to a request from the slave server to update the stored information to make the slave server a second master server of the set of servers, update the stored information to make the slave server a second master server of the set of servers. The data storage node 1100 may operate in the manner described herein.

**Figure 12** is a block diagram illustrating a slave server 1200 of a network for managing a set of servers of the network in accordance with an embodiment. The set of servers comprise a first master server at which a first replica of a data element is stored and the slave server at which a second replica of the data element is stored. The slave server 1200 comprises a transmission initiating module 1202 configured to, in response to initiation of a procedure by a client node 1000 to update information stored at a data storage node 1100 of the network, that is indicative of which of the set of servers is a master server and which of the set of servers is a slave server, to make the slave server a second master server of the set of servers, initiating transmission of a request toward the data storage node 1100 to update the information stored at the data storage node 1100 to make the slave server 1200 a second master server of the set of servers. The slave server 1200 may operate in the manner described herein.

There is also provided a computer program comprising instructions which, when executed by processing circuitry (such as the processing circuitry 12 of the client node 10 described earlier, the processing circuitry 22 of the data storage node 20 described earlier, or the processing circuitry 32 of the slave server 30 described earlier), cause the processing circuitry to perform at least part of the method described herein. There is provided a computer program product, embodied on a non-transitory machine-readable medium, comprising instructions which are executable by processing circuitry (such as the processing circuitry 12 of the client node 10 described earlier, the processing circuitry 22 of the data storage node 20 described earlier, or the processing circuitry 32 of the slave server 30 described earlier) to cause the processing circuitry to perform at least part of the method described herein. There is provided a computer program product comprising a carrier containing instructions for causing processing circuitry (such as the processing circuitry 12 of the client node 10 described earlier, the processing circuitry 22 of the data storage node 20 described earlier, or the processing circuitry 32 of the slave server 30 described earlier) to perform at least part of the method described herein. In some embodiments, the carrier can be any one of an electronic signal, an optical signal, an electromagnetic signal, an electrical signal, a radio signal, a microwave signal, or a computer-readable storage medium.

The server and/or node functionality described herein can be performed by hardware. Thus, any one or more servers described herein can be a hardware server and/or any one or more nodes described herein can be a hardware node. However, it will also be understood that at least part or all of the server and/or node functionality described herein can be virtualized. For example, the functions performed by any one or more servers described herein can be implemented in software running on generic hardware that is configured to orchestrate the server functionality and/or the functions performed by any one or more nodes described herein can be implemented in software running on generic hardware that is configured to orchestrate the node functionality. Thus, in some embodiments, any one or more servers described herein can be a virtual server and/or any one or more nodes described herein can be a virtual node. In some embodiments, at least part or all of the server functionality described herein and/or at least part or all of the node functionality described herein may be performed in a network enabled cloud. The server functionality described herein may all be at the same location or at least some of the server functionality may be distributed. Similarly, the node functionality described herein may all be at the same location or at least some of the node functionality may be distributed.

It will be understood that at least some or all of the method steps described herein can be automated in some embodiments. That is, in some embodiments, at least some or all of the method steps described herein can be performed automatically. Although the method has been described in respect of a single client node 10 and a single data element, it will be understood that the method may be performed for a plurality of client nodes and/or in respect of a plurality of data elements. For example, a single client may attempt to update a single data element, a single client may attempt to update multiple data elements, multiple clients may attempt to update a single data element, or multiple clients may attempt to update multiple data elements.

Thus, in the manner described herein, there is advantageously provided an improved technique for managing a set of servers of a network. The technique can be advantageous for a distributed data store with master-slave replication in the case of partitioning, whereby a master replica of a data element is unavailable for a client node 10. When the client node 10 wants to update such a data element, it can first initiate the slave elevation procedure as described herein to make one of the slave servers 30 into the new master server. According to some embodiments described herein, this will be successful if certain pre-conditions are met at this slave server 30 and/or this slave server 30 is able to carry out the procedure with the other available servers involved.

It should be noted that the above-mentioned embodiments illustrate rather than limit the invention which is solely defined by the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

## Claims

1. A method performed by a client node (10) of a network (500) for managing a set of servers of the network (500), the method comprising:
in response to a determination that a first replica of a data element stored at a first master server (40) of the set of servers is unreachable:
selecting (102) a slave server (30) of the set of servers, at which a second replica of the data element is stored, to become a second master server of the set of servers; and
initiating (104) a procedure to update information stored at a data storage node (20) of the network (500), that is indicative of which of the set of servers is a master server and which of the set of servers is a slave server, to make the selected slave server (30) the second master server,
wherein:
the selection of the slave server and initiation of the procedure to update information stored at the data storage node (20) is in response to a successful locking of the data element; and/or
selecting (102) a slave server (30) comprises:
randomly selecting a slave server (30) of the set of servers, at which a second replica of the data element is stored, to become the second master server of the set of servers; or
selecting a slave server (30) of the set of servers, at which a second replica of the data element is stored, that is closest to the client node (10) to become the second master server of the set of servers; or
selecting a slave server (30) of the set of servers, at which a second replica of a latest version of the data element is stored, to become the second master server of the set of servers.

2. A method as claimed in claim 1, the method comprising:
initiating transmission of a request toward the data storage node (20) to lock the data element;
in response to an unsuccessful locking of the data element, initiating transmission of a request toward the first master server (40) to update the first replica of the data element and/or aborting an update of the first replica of the data element;
initiating transmission of a request toward the second master server to update the second replica of the data element; and/or
initiating transmission of a request toward the first master server (40) to update the first replica of the data element, wherein the determination that the first replica of the data element is unreachable is following the request to update the first replica of the data element.

3. A method as claimed in claim 2, wherein:
initiating the transmission of the request toward the second master server to update the second replica of the data element is in response to a notification that the procedure to make the slave server the second master server is successful.

4. A client node (10) comprising:
processing circuitry (12) configured to operate in accordance with any of claims 1 to 3.

5. A method performed by a data storage node (20) of a network (500) for managing a set of servers of the network (500), wherein the set of servers comprise a first master server (40) at which a first replica of a data element is stored and a slave server (30) at which a second replica of the data element is stored, and the data storage node (20) stores information indicative of which of the set of servers is a master server and which of the set of servers is a slave server, the method comprising:
in response to a request from the slave server (30) to update the stored information to make the slave server (30) a second master server of the set of servers:
updating (202) the stored information to make the slave server (30) a second master server of the set of servers; and
wherein the method comprises:
in response to a request from a client node (10) to lock the data element, deciding whether to lock the data element;
initiating transmission of a notification toward the slave server (30) indicative of whether the procedure to make the slave server the second master server is successful or unsuccessful; and/or
in response to a request from the slave server (30) to update the stored information to make the first master server (40) a slave server of the set of servers, updating the stored information to make the first master server (40) a slave server of the set of servers.

6. A method as claimed in claim 5, wherein:
the decision whether to lock the data element is based on whether there is an asymmetric partitioning of the set of servers in which the first master server (40) is unreachable while other servers of the set of servers are reachable and/or is based on a length of time since a last update to make a slave server a master server;
the method comprises initiating transmission of a notification indicative of whether the locking of the data element is successful or unsuccessful; and/or
the data element is locked and the method comprises unlocking the data element upon expiry of a predetermined time period.

7. A data storage node (20) comprising:
processing circuitry (22) configured to operate in accordance with claim 5 or 6.

8. A method performed by a slave server (30) of a set of servers of a network (500) for managing the set of servers, wherein the set of servers comprise a first master server (40) at which a first replica of a data element is stored and the slave server (30) at which a second replica of the data element is stored, the method comprising:
in response to initiation of a procedure by a client node (10) to update information stored at a data storage node (20) of the network (500), that is indicative of which of the set of servers is a master server and which of the set of servers is a slave server, to make the slave server (30) a second master server of the set of servers:
initiating (302) transmission of a request toward the data storage node (20) to update the information stored at the data storage node (20) to make the slave server (30) a second master server of the set of servers; and
wherein the method comprises:
in response to a request from the client node (10) to update the second replica of the data element, attempting to update the second replica of the data element;
initiating transmission of a notification toward the client node (10) indicative of whether the procedure to make the slave server the second master server is successful or unsuccessful;
initiating transmission of a request toward the data storage node (20) to update the information stored at the data storage node (20) to make the first master server (40) a slave server of the set of servers;
in response to a determination that a majority of replicas of the data element stored at the second master server are reachable, initiating transmission of a request toward the second master server to update the second replica of the data element;
in response to a determination that a minority of replicas of the data element stored at the second master server are reachable, attempting to reach a majority of replicas of the data element stored at the second master server, waiting for an indication that a majority of replicas of the data element stored at the second master server have become available, and/or initiating transmission of an error message toward the client node (10); and/or
initiating a procedure to synchronise the second replica of the data element stored at the second master server and replicas of the data element stored at other slave servers of the set of slave servers.

9. A method as claimed in claim 8, wherein:
a majority of replicas of the data element stored at the second master server is at least half of the replicas of the data element stored at the second master server;
a minority of replicas of the data element stored at the second master server is less than half of the replicas of the data element stored at the second master server; and/or
initiating a procedure to synchronise comprises checking which of the second replica of the data element stored at the second master server and the replicas of the data element stored at other slave servers of the set of slave servers is the latest replica of the data element, and initiating a procedure to synchronise the second replica of the data element stored at the second master server and the replicas of the data element stored at other slave servers of the set of slave servers with the latest replica of the data element.

10. A slave server (30) comprising:
processing circuitry (32) configured to operate in accordance with claim 8 or 9.

11. A network comprising any two or more of:
a client node as claimed in claim 4;
a data storage node as claimed in claim 7; and
a slave server as claimed in claim 10.

12. A computer program comprising instructions which, when executed by processing circuitry, cause the processing circuitry to perform the method according to any of claims 1 to 3, claim 5 or 6, and/or claim 8 or 9.

## Patentansprüche

1. Verfahren, das von einem Client-Knoten (10) eines Netzwerks (500) durchgeführt wird, zur Verwaltung eines Satzes von Servern des Netzwerks (500), wobei das Verfahren Folgendes umfasst:
in Reaktion auf eine Bestimmung, dass eine erste Replik eines Datenelements, die an einem ersten Master-Server (40) des Satzes von Servern gespeichert ist, nicht erreichbar ist:
Auswählen (102) eines Slave-Servers (30) des Satzes von Servern, an dem eine zweite Replik des Datenelements gespeichert ist, um ein zweiter Master-Server des Satzes von Servern zu werden; und
Initiieren (104) einer Prozedur zum Aktualisieren von Informationen, die an einem Datenspeicherknoten (20) des Netzwerks (500) gespeichert sind und die angeben, welcher aus dem Satz von Servern ein Master-Server ist und welcher aus dem Satz von Servern ein Slave-Server ist, um den ausgewählten Slave-Server (30) zum zweiten Master-Server zu machen,
wobei:
die Auswahl des Slave-Knotens und die Initiierung der Prozedur zum Aktualisieren der an dem Datenspeicherknoten (20) gespeicherten Informationen in Reaktion auf ein erfolgreiches Sperren des Datenelements erfolgen; und/oder
das Auswählen (102) eines Slave-Servers (30) Folgendes umfasst:
Auswählen eines Slave-Servers (30) des Satzes von Servern, an dem eine zweite Replik des Datenelements gespeichert ist, um der zweite Master-Server des Satzes von Servern zu werden, nach dem Zufallsprinzip; und
Auswählen eines Slave-Servers (30) des Satzes von Servern, an dem eine zweite Replik des Datenelements gespeichert ist und der dem Client-Knoten (10) am nächsten ist, um der zweite Master-Server des Satzes von Servern zu werden; und
Auswählen eines Slave-Servers (30) des Satzes von Servern, an dem eine zweite Replik einer letzten Version des Datenelements gespeichert ist, um der zweite Master-Server des Satzes von Servern zu werden.

2. Verfahren nach Anspruch 1, wobei das Verfahren Folgendes umfasst:
Initiieren einer Übertragung einer Anforderung zum Sperren des Datenelements an den Datenspeicherknoten (20);
in Reaktion auf ein erfolgloses Sperren des Datenelements Initiieren einer Übertragung einer Anforderung an den ersten Master-Server (40) zum Aktualisieren der ersten Replik des Datenelements und/oder Abbrechen einer Aktualisierung der ersten Replik des Datenelements;
Initiieren einer Übertragung einer Anforderung zum Aktualisieren der zweiten Replik des Datenelements an den zweiten Master-Server; und/oder
Initiieren einer Übertragung einer Anforderung zum Aktualisieren der ersten Replik des Datenelements an den ersten Master-Server (40), wobei die Bestimmung, dass die erste Replik des Datenelements nicht erreichbar ist, nach der Anforderung zum Aktualisieren der ersten Replik des Datenelements erfolgt.

3. Verfahren nach Anspruch 2, wobei:
das Initiieren der Übertragung der Anforderung zum Aktualisieren der zweiten Replik des Datenelements an den zweiten Master-Server in Reaktion auf eine Benachrichtigung erfolgt, dass die Prozedur, um den Slave-Server zum zweiten Master-Server zu machen, erfolgreich ist.

4. Client-Knoten (10), umfassend:
Verarbeitungsschaltungsanordnung (12), die so ausgelegt ist, dass sie nach einem der Ansprüche 1 bis 3 funktioniert.

5. Verfahren, das von einem Datenspeicherknoten (20) eines Netzwerks (500) durchgeführt wird, zur Verwaltung eines Satzes von Servern des Netzwerks (500), wobei der Satz von Servern einen ersten Master-Server (40), an dem eine erste Replik eines Datenelements gespeichert ist, und einen Slave-Server (30) umfasst, an dem eine zweite Replik des Datenelements gespeichert ist, und der Datenspeicherknoten (20) Informationen speichert, die angeben, welcher aus dem Satz von Servern ein Master-Server ist und welcher aus dem Satz von Servern ein Slave-Server ist, wobei das Verfahren Folgendes umfasst:
in Reaktion auf eine Anforderung vom Slave-Server (30) zum Aktualisieren der gespeicherten Informationen, um den Slave-Server (30) zu einem zweiten Master-Server des Satzes von Servern zu machen:
Aktualisieren (202) der gespeicherten Informationen, um den Slave-Server (30) zu einem zweiten Master-Server des Satzes von Servern zu machen: und
wobei das Verfahren Folgendes umfasst:
in Reaktion auf eine Anforderung von einem Client-Knoten (10) zum Sperren des Datenelements, Entscheiden, ob das Datenelement gesperrt werden soll;
Initiieren einer Übertragung einer Benachrichtigung an den Slave-Server (30), die angibt, ob die Prozedur, um den Slave-Server zum zweiten Master-Server zu machen, erfolgreich oder nicht erfolgreich ist; und/oder
in Reaktion auf eine Anforderung vom Slave-Server (30) zum Aktualisieren der gespeicherten Informationen, um den ersten Master-Server (40) zu einem Slave-Server des Satzes von Servern zu machen, Aktualisieren der gespeicherten Informationen, um den ersten Master-Server (40) zu einem Slave-Server des Satzes von Servern zu machen.

6. Verfahren nach Anspruch 5, wobei:
die Entscheidung, ob das Datenelement gesperrt werden soll, darauf basiert, ob eine asymmetrische Partitionierung des Satzes von Servern vorliegt, bei der der erste Master-Server (40) nicht erreichbar ist, während andere Server des Satzes von Servern erreichbar sind, und/oder auf einer Zeitdauer seit einer letzten Aktualisierung, um einen Slave-Server zu einem Master-Server zu machen, basiert;
das Verfahren Initiieren einer Übertragung einer Benachrichtigung umfasst, die angibt, ob das Sperren des Datenelements erfolgreich ist oder nicht erfolgreich ist; und/oder
das Datenelement gesperrt wird und das Verfahren Entsperren des Datenelements nach Ablauf eines vorbestimmten Zeitraums umfasst.

7. Datenspeicherknoten (20), umfassend:
Verarbeitungsschaltungsanordnung (22), die so ausgelegt ist, dass sie nach einem der Ansprüche 5 bis 6 funktioniert.

8. Verfahren, das von einem Slave-Server (30) eines Satzes von Servern eines Netzwerks (500) durchgeführt wird, zur Verwaltung des Satzes von Servern, wobei der Satz von Servern einen ersten Master-Server (40), an dem eine erste Replik eines Datenelements gespeichert ist, und den Slave-Server (30) umfasst, an dem eine zweite Replik des Datenelements gespeichert ist, wobei das Verfahren Folgendes umfasst:
in Reaktion auf die Initiierung einer Prozedur durch einen Client-Knoten (10) zum Aktualisieren von Informationen, die an einem Datenspeicherknoten (20) des Netzwerks (500) gespeichert sind und die angeben, welcher aus dem Satz von Servern ein Master-Server ist und welcher aus dem Satz von Servern ein Slave-Server ist, um den Slave-Server (30) zu einem zweiten Master-Server des Satzes von Servern zu machen:
Initiieren (302) einer Übertragung einer Anforderung an den Datenspeicherknoten (20) zum Aktualisieren der Informationen, die an dem Datenspeicherknoten (20) gespeichert sind, um den Slave-Server (30) zu einem zweiten Master-Server des Satzes von Servern zu machen; und
wobei das Verfahren Folgendes umfasst:
in Reaktion auf eine Anforderung von dem Client-Knoten (10) zum Aktualisieren der zweiten Replik des Datenelements Versuchen, die zweite Replik des Datenelements zu aktualisieren;
Initiieren einer Übertragung einer Benachrichtigung an den Client-Knoten (10), die angibt, ob die Prozedur, um den Slave-Server zum zweiten Master-Server zu machen, erfolgreich oder nicht erfolgreich ist;
Initiieren einer Übertragung einer Anforderung an den Datenspeicherknoten (20) zum Aktualisieren der Informationen, die an dem Datenspeicherknoten (20) gespeichert sind, um den ersten Master-Server (40) zu einem Slave-Server des Satzes von Servern zu machen;
in Reaktion auf eine Bestimmung, dass eine Mehrheit von Repliken des Datenelements, die an dem zweiten Master-Server gespeichert ist, erreichbar ist, Initiieren einer Übertragung einer Anforderung an den zweiten Master-Server zum Aktualisieren der zweiten Replik des Datenelements;
in Reaktion auf eine Bestimmung, dass eine Minderheit von Repliken des Datenelements, die an dem zweiten Master-Server gespeichert ist, erreichbar ist, Versuchen, eine Mehrheit von Repliken des Datenelements, die an dem zweiten Master-Server gespeichert ist, zu erreichen, Warten auf eine Angabe, dass eine Mehrheit von Repliken des Datenelements, die an dem zweiten Master-Server gespeichert ist, verfügbar geworden ist, und/oder Initiieren einer Übertragung einer Fehlermeldung an den Client-Knoten (10); und/oder
Initiieren einer Prozedur zum Synchronisieren der zweiten Replik des Datenelements, die an dem zweiten Master-Server gespeichert ist, und von Repliken des Datenelements, die an anderen Slave-Servern des Satzes von Slave-Servern gespeichert sind.

9. Verfahren nach Anspruch 8, wobei:
eine Mehrheit von Repliken des Datenelements, die an dem zweiten Master-Server gespeichert ist, mindestens die Hälfte der Repliken des Datenelements beträgt, die an dem zweiten Master-Server gespeichert sind;
eine Minderheit von Repliken des Datenelements, die an dem zweiten Master-Server gespeichert sind, mindestens die Hälfte der Repliken des Datenelements beträgt, die an dem zweiten Master-Server gespeichert sind; und/oder
das Initiieren einer Prozedur zum Synchronisieren Prüfen umfasst, welche von der zweiten Replik des Datenelements, die an dem zweiten Master-Server gespeichert ist, und den Repliken des Datenelements, die an anderen Slave-Servern des Satzes von Slave-Servern gespeichert sind, die letzte Replik des Datenelements ist, und Initiieren einer Prozedur zum Synchronisieren der zweiten Replik des Datenelements, die an dem zweiten Master-Server gespeichert ist, und der Repliken des Datenelements, die an anderen Slave-Servern des Satzes von Slave-Servern gespeichert sind, mit der letzten Replik des Datenelements.

10. Slave-Server (30) umfassend:
Verarbeitungsschaltungsanordnung (32), die so ausgelegt ist, dass sie nach einem der Ansprüche 8 bis 9 funktioniert.

11. Netzwerk, umfassend zwei oder mehr von Folgenden:
einen Client-Knoten nach Anspruch 4;
einen Datenspeicherknoten nach Anspruch 7; und
einen Slave-Server nach Anspruch 10.

12. Computerprogramm, umfassend Anweisungen, die bei Ausführung durch Verarbeitungsschaltungsanordnung die Verarbeitungsschaltungsanordnung zum Durchführen des Verfahrens nach einem der Ansprüche 1 bis 3, Anspruch 5 oder 6 und/oder Anspruch 8 oder 9 veranlassen.

## Revendications

1. Procédé réalisé par un nœud client (10) d'un réseau (500) pour gérer un ensemble de serveurs du réseau (500), le procédé comprenant :
en réponse à une détermination qu'une première réplique d'un élément de données stockée au niveau d'un premier serveur maître (40) de l'ensemble de serveurs est injoignable :
la sélection (102) d'un serveur esclave (30) de l'ensemble de serveurs, au niveau duquel une deuxième réplique de l'élément de données est stockée, pour devenir un deuxième serveur maître de l'ensemble de serveurs ; et
l'initiation (104) d'une procédure pour mettre à jour des informations stockées au niveau d'un nœud de stockage de données (20) du réseau (500), indiquant lequel de l'ensemble de serveurs est un serveur maître et lequel de l'ensemble de serveurs est un serveur esclave, pour faire du serveur esclave (30) sélectionné le deuxième serveur maître ;
dans lequel :
la sélection du serveur esclave et l'initiation de la procédure pour mettre à jour des informations stockées au niveau du nœud de stockage de données (20) sont en réponse à un verrouillage réussi de l'élément de données ; et/ou
la sélection (102) d'un serveur esclave (30) comprend :
la sélection aléatoire d'un serveur esclave (30) de l'ensemble de serveurs, au niveau duquel une deuxième réplique de l'élément de données est stockée, pour devenir le deuxième serveur maître de l'ensemble de serveurs ; ou
la sélection d'un serveur esclave (30) de l'ensemble de serveurs, au niveau duquel une deuxième réplique de l'élément de données est stockée, qui est le plus proche du nœud client (10) pour devenir le deuxième serveur maître de l'ensemble de serveurs ; ou
la sélection d'un serveur esclave (30) de l'ensemble de serveurs, au niveau duquel une deuxième réplique d'une version la plus récente de l'élément de données est stockée, pour devenir le deuxième serveur maître de l'ensemble de serveurs.

2. Procédé selon la revendication 1, le procédé comprenant :
l'initiation d'une transmission d'une demande vers le nœud de stockage de données (20) pour verrouiller l'élément de données ;
en réponse à un échec de verrouillage de l'élément de données, l'initiation d'une transmission d'une demande vers le premier serveur maître (40) pour mettre à jour la première réplique de l'élément de données et/ou l'abandon d'une mise à jour de la première réplique de l'élément de données ;
l'initiation d'une transmission d'une demande vers le deuxième serveur maître pour mettre à jour la deuxième réplique de l'élément de données ; et/ou
l'initiation d'une transmission d'une demande vers le premier serveur maître (40) pour mettre à jour la première réplique de l'élément de données, dans lequel la détermination que la première réplique de l'élément de données est injoignable suit la demande de mise à jour de la première réplique de l'élément de données.

3. Procédé selon la revendication 2, dans lequel :
l'initiation de la transmission de la demande vers le deuxième serveur maître pour mettre à jour la deuxième réplique de l'élément de données est en réponse à une notification que la procédure pour faire du serveur esclave le deuxième serveur maître a réussi.

4. Nœud client (10) comprenant :
une circuiterie de traitement (12) configurée pour fonctionner selon l'une quelconque des revendications 1 à 3.

5. Procédé réalisé par un nœud de stockage de données (20) d'un réseau (500) pour gérer un ensemble de serveurs du réseau (500), dans lequel l'ensemble de serveurs comprend un premier serveur maître (40) au niveau duquel une première réplique d'un élément de données est stockée et un serveur esclave (30) au niveau duquel une deuxième réplique de l'élément de données est stockée, et le nœud de stockage de données (20) stocke des informations indiquant lequel de l'ensemble de serveurs est un serveur maître et lequel de l'ensemble de serveurs est un serveur esclave, le procédé comprenant :
en réponse à une demande du serveur esclave (30) de mettre à jour les informations stockées pour faire du serveur esclave (30) un deuxième serveur maître de l'ensemble de serveurs :
la mise à jour (202) des informations stockées pour faire du serveur esclave (30) un deuxième serveur maître de l'ensemble de serveurs ; et
dans lequel le procédé comprend :
en réponse à une demande d'un nœud client (10) de verrouiller l'élément de données, la décision s'il faut ou non verrouiller l'élément de données :
l'initiation d'une transmission d'une notification vers le serveur esclave (30) indiquant si la procédure pour faire du serveur esclave le deuxième serveur maître a réussi ou a échoué ; et/ou
en réponse à une demande du serveur esclave (30) de mettre à jour les informations stockées pour faire du premier serveur maître (40) un serveur esclave de l'ensemble de serveurs, la mise à jour des informations stockées pour faire du premier serveur maître (40) un serveur esclave de l'ensemble de serveurs.

6. Procédé selon la revendication 5, dans lequel :
la décision s'il faut ou non verrouiller l'élément de données est basée sur le fait qu'il existe ou non un partitionnement asymétrique de l'ensemble de serveurs dans lequel le premier serveur maître (40) est injoignable tandis que d'autres serveurs de l'ensemble de serveurs sont joignables et/ou est basée sur une durée depuis une dernière mise à jour pour faire d'un serveur esclave un serveur maître ;
le procédé comprend l'initiation d'une transmission d'une notification indiquant si le verrouillage de l'élément de données a réussi ou a échoué ; et/ou
l'élément de données est verrouillé et le procédé comprend le déverrouillage de l'élément de données à l'expiration d'une période de temps prédéterminée.

7. Nœud de stockage de données (20) comprenant :
une circuiterie de traitement (22) configurée pour fonctionner selon la revendication 5 ou 6.

8. Procédé réalisé par un serveur esclave (30) d'un ensemble de serveurs d'un réseau (500) pour gérer l'ensemble de serveurs, dans lequel l'ensemble de serveurs comprend un premier serveur maître (40) au niveau duquel une première réplique d'un élément de données est stockée et le serveur esclave (30) au niveau duquel une deuxième réplique de l'élément de données est stockée, le procédé comprenant :
en réponse à une initiation d'une procédure par un nœud client (10) pour mettre à jour des informations stockées au niveau d'un nœud de stockage de données (20) du réseau (500), indiquant lequel de l'ensemble de serveurs est un serveur maître et lequel de l'ensemble de serveurs est un serveur esclave, pour faire du serveur esclave (30) un deuxième serveur maître de l'ensemble de serveurs :
l'initiation (302) d'une transmission d'une demande vers le nœud de stockage de données (20) pour mettre à jour les informations stockées au niveau du nœud de stockage de données (20) pour faire du serveur esclave (30) un deuxième serveur maître de l'ensemble de serveurs ; et
dans lequel le procédé comprend :
en réponse à une demande du nœud client (10) de mettre à jour la deuxième réplique de l'élément de données, la tentative de mettre à jour la deuxième réplique de l'élément de données ;
l'initiation d'une transmission d'une notification vers le nœud client (10) indiquant si la procédure pour faire du serveur esclave le deuxième serveur maître a réussi ou a échoué ;
l'initiation d'une transmission d'une demande vers le nœud de stockage de données (20) pour mettre à jour les informations stockées au niveau du nœud de stockage de données (20) pour faire du premier serveur maître (40) un serveur esclave de l'ensemble de serveurs ;
en réponse à une détermination qu'une majorité de répliques de l'élément de données stockées au niveau du deuxième serveur maître sont injoignables, l'initiation d'une transmission d'une demande vers le deuxième serveur maître pour mettre à jour la deuxième réplique de l'élément de données ;
en réponse à une détermination qu'une minorité de répliques de l'élément de données stockées au niveau du deuxième serveur maître sont injoignable, la tentative de joindre une majorité de répliques de l'élément de données stockées au niveau du deuxième serveur maître, l'attente d'une indication qu'une majorité de répliques de l'élément de données stockées au niveau du deuxième serveur maître sont devenues disponibles, et/ou l'initiation d'une transmission d'un message d'erreur vers le nœud client (10) ; et/ou
l'initiation d'une procédure pour synchroniser la deuxième réplique de l'élément de données stockée au niveau du deuxième serveur maître et des répliques de l'élément de données stockées au niveau d'autres serveurs esclaves de l'ensemble de serveurs esclaves.

9. Procédé selon la revendication 8, dans lequel :
une majorité de répliques de l'élément de données stockées au niveau du deuxième serveur maître compte au moins la moitié des répliques de l'élément de données stockées au niveau du deuxième serveur maître ;
une minorité de répliques de l'élément de données stockées au niveau du deuxième serveur maître compte moins de la moitié des répliques de l'élément de données stockées au niveau du deuxième serveur maître ; et/ou
l'initiation d'une procédure de synchronisation comprend la vérification de laquelle de la deuxième réplique de l'élément de données stockée au niveau du deuxième serveur maître et des répliques de l'élément de données stockées au niveau d'autres serveurs esclaves de l'ensemble de serveurs esclaves est la plus récente réplique de l'élément de données, et l'initiation d'une procédure pour synchroniser la deuxième réplique de l'élément de données stockée au niveau du deuxième serveur maître et les répliques de l'élément de données stockées au niveau d'autres serveurs esclaves de l'ensemble de serveurs esclaves avec la plus récente réplique de l'élément de données.

10. Serveur esclave (30) comprenant :
une circuiterie de traitement (32) configurée pour fonctionner selon la revendication 8 ou 9.

11. Réseau comprenant deux quelconques ou plus parmi :
un nœud client selon la revendication 4 ;
un nœud de stockage de données selon la revendication 7 ; et
un serveur esclave selon la revendication 10.

12. Programme informatique comprenant des instructions qui, lorsqu'elles sont exécutées par une circuiterie de traitement, amènent la circuiterie de traitement à réaliser le procédé selon l'une quelconque des revendications 1 à 3, de la revendication 5 ou 6 et/ou de la revendication 8 ou 9.
